(19) Europäisches Patentamt
European Patent Office
Office européen des brevets

(11) **EP 2 425 206 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(21) Anmeldenummer: **10718943.3**

(22) Anmeldetag: **28.04.2010**

(51) Int Cl.:
*G01C 19/56* $^{(2012.01)}$     *G01C 19/5712* $^{(2012.01)}$
*G01C 19/5755* $^{(2012.01)}$

(86) Internationale Anmeldenummer:
**PCT/EP2010/055708**

(87) Internationale Veröffentlichungsnummer:
**WO 2010/125098 (04.11.2010 Gazette 2010/44)**

(54) **VERFAHREN ZUM PRÄZISEN MESSBETRIEB EINES MIKROMECHANISCHEN DREHRATENSENSORS**

METHOD FOR THE PRECISE MEASURING OPERATION OF A MICROMECHANICAL ROTATION RATE SENSOR

PROCÉDÉ POUR ASSURER UNE MESURE PRÉCISE AVEC UN CAPTEUR DE LACET MICROMÉCANIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.04.2009 DE 102009019318**

(43) Veröffentlichungstag der Anmeldung:
**07.03.2012 Patentblatt 2012/10**

(73) Patentinhaber:
• **Continental Teves AG & Co. OHG**
**60488 Frankfurt am Main (DE)**
• **Murata Electronics Oy**
**01620 Vantaa (FI)**

(72) Erfinder:
• **SIVARAMAN, Ramnath**
**122001 Gurgaon (IN)**
• **SCHMID, Bernhard**
**61169 Friedberg (DE)**
• **HILSER, Roland**
**73230 Kirchheim Teck (DE)**
• **GÜNTHNER, Stefan**
**60489 Frankfurt (DE)**
• **KLEMETTI, Petri**
**FI-01800 Klaukkala (FI)**

(56) Entgegenhaltungen:
**WO-A1-03/010492**     **DE-A1- 19 939 998**
**DE-A1-102007 030 119**

EP 2 425 206 B1

**Beschreibung**

Die Erfindung betrifft ein Verfahren zum präzisen Messbetrieb eines mikromechanischen Drehratensensors gemäß Oberbegriff von Anspruch 1 oder 2, einen mikromechanischen Drehratensensor gemäß Oberbegriff von Anspruch 7 sowie die Verwendung des Drehratensensors in Kraftfahrzeugen.

Es ist bekannt, dass mikromechanische Federn zur Aufhängung seismischer Massen in Drehratensensoren teilweise schon aufgrund relativ geringer Fertigungsungenauigkeiten, die insbesondere zu unerwünschten Flankenwinkeln der jeweiligen Strukturen führen, ohne Vorliegen einer Drehrate, in der Antriebsmode Auslenkungen in Ausleserichtung verursachen. Hierdurch werden Störsignale erzeugt, welche unerwünschterweise als Drehratensignalanteile ausgewertet werden können und somit das Drehratensignal verfälschen bzw. einen Messfehler bezüglich des Drehratensignals verursachen.

Solche unerwünschten Flankenwinkel bzw. Verkippungen von Federn sind prozessbedingt und können nur eingeschränkt vermieden werden. Obig beschriebene Störsignale, welche nicht aufgrund einer erfassten Drehrate, sondern aufgrund von fehlerhaften Auslenkungen in Ausleserichtung in Abhängigkeit der Auslenkung der seismischen Masse sowie deren Federn in Antriebsrichtung entstehen, werden auch als Quadratur bzw. Quadratursignale bezeichnet.

Die gattungsbildende DE 199 39 998 A1 beschreibt ein Verfahren zum Betreiben eines Drehratensensors, welcher ein erstes und ein zweites Trimm-Elektrodenelement aufweist, die einer seismischen Masse zugeordnet sind, wobei zwischen dem ersten Trimm-Elektrodenelement und der seismischen Masse eine erste elektrische Trimmspannung sowie zwischen dem zweiten Trimm Elektrodenelement und der seismischen Masse eine zweite elektrische Trimmspannung eingestellt werden, wobei die erste und die zweite elektrische Trimmspannung zumindest in Abhängigkeit eines Quadraturparameters und eines Resonanzparameters eingestellt werden.

Druckschrift WO 03/010492 A1 schlägt ein Verfahren zur Unterdrückung von Quadratursignalen in einem Drehratensensor vor, welcher zwei Trimmelektroden-Anordnungen umfasst, die einer seismischen Masse zugeordnet sind, bei dem mittels der an den Trimmelektroden angelegten Spannung die Quadratur des Drehratensensors unterdrückt wird. Allerdings kann durch diese Quadraturunterdrückung die Resonanzfrequenz der Auslesemode des Drehratensensors in unerwünschter Weise beeinflusst werden, wodurch auch die Differenzfrequenz zwischen den Resonanzfrequenzen hinsichtlich der Antriebsmode und der Auslesemode des Drehratensensors verändert wird. Dies ist umso nachteiliger, da die an den Trimmelektroden angelegte Spannung in die Verschiebung der Resonanzfrequenz der Auslesemode quadratisch eingeht.

Es ist üblich, dass die Ausprägung der Quadratur von Drehratensensoren eines Wafers, aufgrund von Prozessschwankungen relativ stark streut bzw. sich von Drehratensensor zu Drehratensensor eines Wafers relativ stark unterscheidet.

Die Aufgabe der vorliegenden Erfindung besteht nun darin, ein Verfahren vorzuschlagen, bei dem eine unerwünschte Beeinflussung der Frequenz/Resonanzfrequenz der Auslesemode des Drehratensensors im Zuge einer Quadraturunterdrückung vermieden werden kann und insbesondere eine gewünschte Resonanzfrequenz bei gleichzeitiger Quadraturunterdrückung eingestellt werden kann.

Diese Aufgabe wird erfindungsgemäß gelöst durch die Verfahren gemäß Ansprüchen 1 und 2 sowie den mikromechanischen Drehratensensor gemäß Anspruch 7.

Der Erfindung liegt insbesondere der Gedanke zu Grunde, eine erste und eine zweite Trimmspannung an einer ersten und einer zweiten Trimm-Elektrode eines Drehratensensors zumindest im Wesentlichen in Abhängigkeit eines Quadraturparameters und eines Resonanzparameters einzustellen bzw. anzulegen bzw. einzuregeln.

Unter dem Einstellen der Trimmspannungen wird zweckmäßigerweise auch ein Regelungsvorgang verstanden.

Der Quadraturparameter ist vorzugsweise als Maß für die Quadratur des Drehratensensors bzw. hinsichtlich des Auslenkverhaltens der wenigstens einen seismischen Masse zu verstehen. Insbesondere ist der Quadraturparameter abhängig vom Quadratursignal bzw. Quadratursignalanteil des Ausgangssignals des Drehratensensors, welcher gegenüber dem die Drehrate abbildenden Anteil des Ausgangssignals des Drehratensensors im Wesentlichen um 90° bzw. 270° phasenverschoben ist. Außerdem ist das Quadratursignal gegenüber dem Primärsignal bzw. der Antriebsmode insbesondere um 0° bzw. 180° phasenverschoben. Besonders bevorzugt ist der Quadraturparameter eine Stellgröße in einer Regelung oder Steuerung, mit der eine Aktorik der seismischen Masse angesteuert werden muss, um die Quadratur bzw. das Quadratursignal der seismischen Masse zu unterdrücken bzw. zu vermeiden. Der Quadraturparameter ist dabei ganz besonders bevorzugt über die an die Aktorik als Stellgröße anzulegende elektrische Spannung definiert und weist dieselbe Einheit auf.

Der Resonanzparameter ist bevorzugt als Maß für die Frequenz bzw. Eigenfrequenz der Auslesemode oder alternativ vorzugsweise als Maß für die Frequenzdifferenz zwischen der Frequenz bzw. Eigenfrequenz des Auslesemode und der Frequenz der Antriebsmode zu verstehen. Der Resonanzparameter wird insbesondere in Abhängigkeit der Resonanzfrequenzen des Drehratensensors bezüglich seiner Antriebs- und seiner Auslesemode bestimmt bzw. ist von diesen Werten abhängig. Besonders bevorzugt soll der Drehratensensor dabei so betrieben werden, dass die Frequenzdifferenz aus der Resonanzfrequenz der Auslesemode minus der Resonanzfrequenz der Antriebsmode im Wesentlichen einen definierten Wert aufweist bzw. auf einen definierten Wert eingeregelt wird oder alternativ vorzugsweise im Wesentlichen Null ist bzw. auf Null eingeregelt wird. Der Resonanzparameter ist dabei ganz besonders bevorzugt über ein die an die Aktorik als Stellgröße anzulegende elektrische Spannung definiert und weist dieselbe Einheit auf.

Es ist zweckmäßig, dass der Resonanzparameter ein Regelparameter ist, um die Auslesefrequenz auf einen definierten Wert oder auf einen definierten Wert in Relation, insbesondere definiert durch eine Frequenzdifferenz, zur Anregefrequenz einzuregeln.

Unter der Frequenz der Auslesemode wird vorzugsweise die Frequenz der Auslese- bzw. Sekundärmode verstanden bzw. die Eigenfrequenz des Auslese- bzw. Sekundäroszillators und unter der Frequenz des Anregesignals bzw. der Anregefrequenz die Frequenz der Antriebsmode bzw. Primärmode, bzw. die Eigenfrequenz des Antriebs-/ Primäroszillators.

Unter einer Antriebsmode bzw. Primärmode wird eine Eigenmode eines Drehratensensors verstanden, bevorzugt die Eigenschwingung, besonders bevorzugt die Schwingung mit einer Resonanzfrequenz, der mindestens einen seismischen Masse, in welcher die seismische Masse des Drehratensensors insbesondere ständig schwingt. Ganz besonders bevorzugt weist der Drehratensensor wenigstens zwei mit einander gekoppelte seismische Massen auf, welche gegenphasig schwingen bzw. jeweils mit inverser Orientierung zueinander in gleicher Richtung im Zuge der Antriebsmode ausgelenkt werden.

Unter einer Auslesemode bzw. Sekundärmode wird eine Eigenmode verstanden, welche sich vorzugsweise aufgrund einer Drehrate und der damit verbundenen Wirkung der Corioliskraft einstellt.

Der Drehratensensor umfasst bevorzugt ein Substrat, welches mit dem System bzw. dem Inertialsystem, dessen Drehrate erfasst bzw. gemessen werden soll verbunden ist. Diese Verbindung ist insbesondere starr und/oder steif ausgebildet. Besonders bevorzugt ist die zumindest eine seismische Masse an dem Substrat aufgehängt und die mindestens zwei Trimm-Elektrodenelemente sind mit dem Substrat fest verbunden.

Der Drehratensensor umfasst vorzugsweise ein Substrat, welches bezüglich seiner Grundfläche im Wesentlichen parallel zur x-y-Ebene eines kartesischen Koordinatensystems ausgerichtet ist. Insbesondere ist dabei die Antriebsmode in x-Richtung ausgeprägt und die Auslesemode in y- oder z-Richtung oder die Antriebsmode ist in y-Richtung ausgeprägt und die Auslesemode in x- oder z-Richtung. Der Drehratensensor ist zweckmäßigerweise entsprechend ausgebildet.

Unter einem Substrat wird ein Grund- und/oder Trägerkörper und/oder Gehäuseteil des Drehratensensors verstanden, welcher bevorzugt ein im Wesentlichen unstrukturierter Teil des Wafers ist, aus welchem der Drehratensensor ausgebildet ist. Besonders bevorzugt besteht das Substrat aus kristallinem oder polykristallinem, insbesondere leitendem, Silizium oder einer oder mehreren Schichten Halbleitermaterials und/oder Metall/en und/oder elektrisch isolierenden Schichten.

Der Drehratensensor weist zweckmäßigerweise wenigstens eine Antriebseinrichtung bzw. ein Antriebsmittel zum Antrieb der seismischen Masse sowie ein oder mehrere Ausleseeinrichtungen zur direkten oder indirekten Erfassung der Auslenkung der seismischen Masse auf.

Es ist bevorzugt, dass der Drehratensensor bezüglich eines kartesischen x-y-z-Koordinatensystems so ausgebildet und angeordnet ist, dass die Antriebsrichtung in x-Richtung erfolgt und er Drehraten um die z-Achse und/oder x-Achse erfassen kann.

Es ist bevorzugt, dass der Drehratensensor so ausgebildet ist, dass er Drehraten um zumindest zwei verschiedene Achsen erfassen kann, also der Drehratensensor "mehrachsig" ausgebildet ist.

Eine seismische Masse umfasst bevorzugt zumindest teilweise eine oder mehrere Antriebseinrichtungen und/oder zumindest teilweise eine oder mehrere Ausleseeinrichtungen und/oder ein oder mehrere zusätzliche mikromechanische Elemente des Drehratensensors.

Der Drehratensensor wird vorzugsweise mittels wenigstens eines mikromechanischen Verfahrens hergestellt. Dabei werden die Strukturen in ein Membranmaterial, insbesondere Silizium, durch besonders bevorzugt anisotropes Trockenätzen im Wesentlichen senkrecht durch die Membran geätzt. Die Ebene der Membrangrundfläche erstreckt sich im Wesentlichen parallel zur Substratoberfläche. An den Stellen, wo die Membran mit dem darunter liegenden Substrat fest verbunden ist, entstehen Ankerpunkte, an denen wiederum entweder Federelemente oder unbewegliche Strukturen befestigt sind. Dadurch können starre Körper, welche an Federn aufgehängt werden, frei schwingend realisiert werden. Die Ankerpunkte sind ganz besonders bevorzugt durch isolierende Schichten voneinander elektrisch isoliert und von außen kontaktierbar.

Es ist bevorzugt, dass das erste und das zweite Trimm-Elektrodenelement, insbesondere hinsichtlich seiner jeweiligen Elektrodenfläche, im Wesentlichen unbeweglich ausgebildet und angeordnet sind und elektrisch isoliert und beabstandet gegenüber der seismischen Masse angeordnet sind.

Die Trimm-Elektrodenelemente sind zweckmäßigerweise voneinander isoliert und besonders bevorzugt jeweils identisch ausgebildet.

Das erste und das zweite Trimm-Elektrodenelement sind bevorzugt oberhalb oder unterhalb oder eines oberhalb und eines unterhalb der seismischen Masse angeordnet und/oder vor oder hinter oder eines vor und eines hinter der seismischen Masse angeordnet.

Der Drehratensensor weist zweckmäßigerweise zwei seismische Massen auf, welche miteinander gekoppelt sind.

Der mindestens einen seismischen Masse sind vorzugsweise zwei zusätzliche Trimm-Elektrodenelemente zugeordnet.

Die erste und zweite Trimmspannung werden bevorzugt zusätzlich in gegenseitiger Abhängigkeit von einander eingestellt.

Die Einstellung der ersten und zweiten Trimmspannung erfolgt erfindungsgemäß mittels einer Regelung. Diese Regelung bzw. das Regelungsverfahren wird im Betrieb des Drehratensensors insbesondere zu definierten Zeiten bzw. periodisch bzw. ständig durchgeführt. Die Regelung ist besonders bevorzugt als "closed loop"-Regelung ausgebildet.

Das Verfahren wird erfindungsgemäß erweitert, indem der Quadraturparameter zu definierten Zeiten bzw. periodisch bzw. ständig in Abhängigkeit bzw. aus dem Quadratursignal ermittelt wird und der Resonanzparameter zu definierten Zeiten bzw. periodisch bzw. ständig in Abhängigkeit bzw. aus der Frequenz der Auslesemode oder aus der Frequenzdifferenz zwischen Auslesemode und Antriebsmode ermittelt wird.

Die erste und zweite Trimmspannung werden gemäß einer erstern Ausführungsform der Erfindung so eingeregelt, dass die Summe, aus dem Quadrat der ersten elektrischen Trimmspannung multipliziert mit einem ersten konstanten Faktor und aus dem Quadrat der zweiten elektrischen Trimmspannung multipliziert mit einem zweiten konstanten Faktor, auf einen ersten Referenzwert des Resonanzparameters zum Quadrat eingestellt/eingeregelt wird. Dabei wird zusätzlich die Differenz, aus dem Quadrat der ersten elektrischen Trimmspannung multipliziert mit einem dritten konstanten Faktor und aus dem Quadrat der zweiten elektrischen Trimmspannung multipliziert mit einem vierten konstanten Faktor, auf einen ersten Referenzwert des Quadraturparameters zum Quadrat eingestellt/eingeregelt. Es hat sich herausgestellt, dass obige Ansteuerung/Regelung der ersten beiden Trimm-Elektrodenelemente mittels der ersten beiden Trimmspannungen besonders geeignet sind zur Quadraturunterdrückung und gleichzeitigem definierten Einstellen eines Resonanzparameters bzw. der Resonanzfrequenz der seismischen Masse hinsichtlich der Auslesemode in dem besonders bevorzugten Fall, dass die Trimm-Elektrodenelemente mit ihrer der seismischen Masse gemeinsam jeweils zugeordneten Elektrodenfläche im Wesentlichen parallel zur Trimmfläche der seismischen Masse im unausgelenkten Zustand angeordnet sind und diese Elektrodenflächen im Wesentlichen plan ausgebildet sind.

Gemäß einer zweiten Ausführungsform der Erfindung werden die erste und die zweite elektrische Trimmspannung so eingestellt/eingeregelt, dass die Summe, aus der ersten elektrischen Trimmspannung multipliziert mit einem ersten konstanten Faktor und aus der zweiten elektrischen Trimmspannung multipliziert mit einem zweiten konstanten Faktor, auf einen ersten Referenzwert des Resonanzparameters eingestellt/eingeregelt, wobei zusätzlich die Differenz, aus der ersten elektrischen Trimmspannung multipliziert mit einem dritten konstanten Faktor und der zweiten elektrischen Trimmspannung multipliziert mit einem vierten konstanten Faktor, auf einen ersten Referenzwert des Quadraturparameters eingestellt/eingeregelt wird.

Die erste elektrische Trimmspannung $U_{T01}$ sowie die zweite elektrische Trimmspannung $U_{TO2}$ werden bevorzugt im Wesentlichen gemäß folgender Gleichungen in Abhängigkeit des Quadraturparameters $U_T$ und der Resonanzparameters $U_f$ eingestellt und/oder eingeregelt:

$$U_f{}^2 \;=\; \alpha * U_{TO1}{}^2 \;+\; \beta * U_{TO2}{}^2$$

und

$$U_T{}^2 \;=\; (\gamma * U_{TO1}{}^2 \;-\; \delta * U_{TO2}{}^2) \; * \; \mathrm{sgn}(QS) \; * \; \varepsilon$$

bzw.

$$U^2{}_{TO1} \;=\; (\beta * U^2{}_T \; * \; \mathrm{sgn}(QS) \; * \; \varepsilon \;+\; \delta * U^2{}_f) / (\alpha * \delta + \beta * \gamma)$$

$$U^2{}_{TO2} \;=\; (\gamma * U^2{}_f \;-\; \alpha * U^2{}_T \; * \; \mathrm{sgn}(QS) \; * \; \varepsilon) / (\alpha * \delta + \beta * \gamma)$$

$\alpha$, $\beta$, $\gamma$ und $\delta$ sind dabei der erste, der zweite, der dritte und der vierte konstante Faktor. Der Ausdruck $\mathrm{sgn}(QS)$ symbolisiert dabei bzw. steht für die Signumfunktion des Quadratursignals QS. Der Parameter $\varepsilon$ ist dabei eine Konstante, insbesondere 1, deren Vorzeichen in Abhängigkeit folgender Bedingungen ausgeprägt ist:

wenn eine Erhöhung des Quadraturparameters $U_T$ zum Quadrat zu einer Reduzierung des Quadratursignals führt, dann ist die Konstante positiv, bzw. wenn bei einer Erhöhung des Terms $\gamma *U_{TO1}^2 - \delta*U_{TO2}^2$ das Quadratursignal QS kleiner wird, dann gilt $\varepsilon = 1$;

wenn eine Erhöhung des Quadraturparameters $U_T$ zum Quadrat zu einer Erhöhung des Quadratursignals führt, dann ist die Konstante negativ, bzw. wenn bei einer Erhöhung des Terms $\delta*U_{TO2}^2 - \gamma *U_{TO1}^2$ das Quadratursignal QS kleiner wird, dann gilt $\varepsilon = -1$.

Gemäß dem in diesen Gleichungen dargestellten Zusammenhang wird bevorzugt die Resonanzfrequenz der Auslesemode unabhängig von der Quadraturunterdrückung bzw. der Resonanzparameter unabhängig vom Quadraturparameter eingestellt.

Es ist zweckmäßig, dass der erste, der zweite, der dritte und der vierte konstante Faktor einen positiven Wert aufweisen, welcher jeweils wenigstens abhängig von einer ersten und einer zweiten Trimm-Kapazität ist, wobei die erste Trimm-Kapazität zumindest abhängig ist von der jeweiligen Ausbildung des erstens Trimm-Elektrodenelements und der seismischen Masse sowie deren Anordnung und Relativbewegungsverhalten zueinander und wobei die zweite Trimm-Kapazität wenigstens abhängig ist von der jeweiligen Ausbildung des zweiten Trimm-Elektrodenelements und der seismischen Masse sowie deren Anordnung und Relativbewegungsverhalten zueinander.

Das Verfahren umfasst vorzugsweise ein Regelungsverfahren, durch welches der Resonanzparameter in zeitlicher Abhängigkeit wenigstens eines zusätzlichen Parameters des Drehratensensors und/oder eines zusätzlichen Parameters, der den Betrieb des Drehratensensors beeinflusst, vorgegeben oder durch zumindest einen zweiten Referenzwert des Resonanzparameters ersetzt wird. Insbesondere ist dieser zusätzliche Parameter eine im Drehratensensor und/oder in dessen direkter Umgebung vorherrschende Temperatur, da der Resonanzparameter eine temperaturabhängige Größe ist.

Es ist bevorzugt, dass im Rahmen des Verfahrens Informationen bezüglich des Betriebsverhaltens des Drehratensensors in Abhängigkeit der Temperatur in Form von wenigstens einer Funktion und/oder von Daten bereitstehen bzw. bereitgestellt werden.

Es ist bevorzugt, dass zumindest das erste Trimm-Elektrodenelement an eine erste elektrische Spannungsquelle angeschlossen ist und das zweite Trimm-Elektrodenelement und/oder die seismische Masse insbesondere an eine zweite elektrische Spannungsquelle angeschlossen ist/sind.

Es ist zweckmäßig, dass das erste und das zweite Trimm-Elektrodenelement jeweils zumindest eine Elektrodenfläche aufweisen, welche einer Trimmfläche der seismischen Masse im Wesentlichen parallel gegenüberliegend angeordnet sind und wobei die Elektrodenflächen des ersten und zweiten Trimm-Elektrodenelements stets einem gegenüberliegenden Bereich der Trimmfläche zugeordnet sind und/oder diesen Bereich überlappen, insbesondere unabhängig vom Auslenkungszustand der seismischen Masse, zumindest bis zu einer definierten Amplitude/Auslenkung, besonders bevorzugt auch bei maximaler Auslenkung der seismischen Masse. Zweckmäßigerweise ragen die Elektrodenflächen dabei stets über den gegenüberliegenden Bereich der Trimmfläche hinaus. Die Elektrodenflächen und die Trimmfläche sind ganz besonders bevorzugt im Wesentlichen plan ausgebildet.

Es ist bevorzugt, dass der Drehratensensor vier oder ein Vielfaches von vier Trimm-Elektrodenelemente aufweist, von denen zwei oder ein Vielfaches von zwei jeweils eine Elektrodenfläche parallel zur x-y-Ebene und zwei oder ein Vielfaches von zwei jeweils eine Elektrodenfläche parallel zur x-z-Ebene und/oder y-z-Ebene aufweisen. Diese Trimm-Elektrodenelemente sind dabei zwei oder mehr seismischen Masse gemeinsam zugeordnet. Insbesondere sind zwei oder mehr seismischen Massen des Drehratensensors jeweils acht solcher Trimm-Elektrodenelemente zugeordnet.

Zweckmäßigerweise ist der Drehratensensor als 2-achsiger Drehratensensor oder alternativ vorzugsweise als 3-achsiger Drehratensensor ausgebildet, wobei er als 3-achsiger Drehratensensor zumindest jeweils zwei, insbesondere genau zwei, Trimm-Elektrodenelemente parallel zur x-y-, x-z, und y-z-Ebene aufweist.

Der Drehratensensor umfasst zweckmäßigerweise zumindest zwei seismische Massen, die über zumindest ein Kopplungselement, insbesondere eine Kopplungsfeder und/oder einen Kopplungsbalken, miteinander gekoppelt sind und insbesondere mittels wenigstens einer Antriebseinrichtung gegenphasig angetrieben werden bzw. eine gegenphasige Antriebsmode aufweisen, wodurch der gemeinsame Massenschwerpunkt dieser seismischen Massen im Wesentlichen in Ruhe bleibt.

Der Drehratensensor ist bevorzugt zumindest teilweise aus Silizium, insbesondere einkristallinem Silizium ausgebildet, wobei die wenigstens eine seismische Masse und/oder zumindest ein Aufhängungselement der seismischen Masse besonders bevorzugt aus leitendem polykristallinem Silizium oder alternativ vorzugsweise aus kristallinem bzw. einkristallinem Silizium ausgebildet ist/sind.

Die Erfindung betrifft auch die Verwendung des Drehratensensors in Kraftfahrzeugen, insbesondere in einem Kraftfahrzeugregelungssystem.

Das erfindungsgemäße Verfahren sowie der erfindungsgemäße Drehratensensor kann in unterschiedlichen Bereichen zum Erfassen einer oder mehrerer Drehraten und/oder mittels entsprechender Signalverarbeitung zur Erfassung einer oder mehrerer Drehbeschleunigungen verwendet werden. Dabei ist die Verwendung in Fahrzeugen, insbesondere in Kraftfahrzeugen und Luftfahrzeugen, in der Automatisierungstechnik, in Navigationssystemen, in Bildstabilisatoren von Kameras, in der Industrierobotik und in Spielekonsolen bevorzugt, dabei besonders bevorzugt in den jeweiligen entsprechenden Regelungssystemen. Ganz besonders bevorzugt ist die Verwendung des Verfahrens sowie des Drehratensensors bei/als Gierraten- und/oder Gierbeschleunigungssensor/en in einem Kraftfahrzeugregelungssystem, wie beispielsweise ESP.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung

Fig. 1 bis 3     Ausführungsbeispiele zur Unterdrückung unerwünschter Auslenkungen der seismischen Masse senkrecht zur Antriebsrichtung und senkrecht zur Schwingungsebene,

Fig. 4, 5     beispielhafte Drehratensensoren zur Unterdrückung unerwünschter Auslenkungen der seismischen Masse senkrecht zur Antriebsrichtung und innerhalb der Schwingungsebene,

Fig. 6     einen beispielhaften Drehratensensor mit einer zylinderförmigen, an einer Torsionsfeder aufgehängten, seismischen Masse,

Fig. 7, 8     beispielhaft eingestellte Trimmspannungen an einem Drehratensensor mit einer seismischen Masse,

Fig. 9, 10     beispielhaft eingestellte Trimmspannungen an einem Drehratensensor mit zwei gekoppelten seismischen Massen, und

Fig. 11 bis 13     beispielhafte Diagramme zur Veranschaulichung der Regelung der Trimmspannungen.

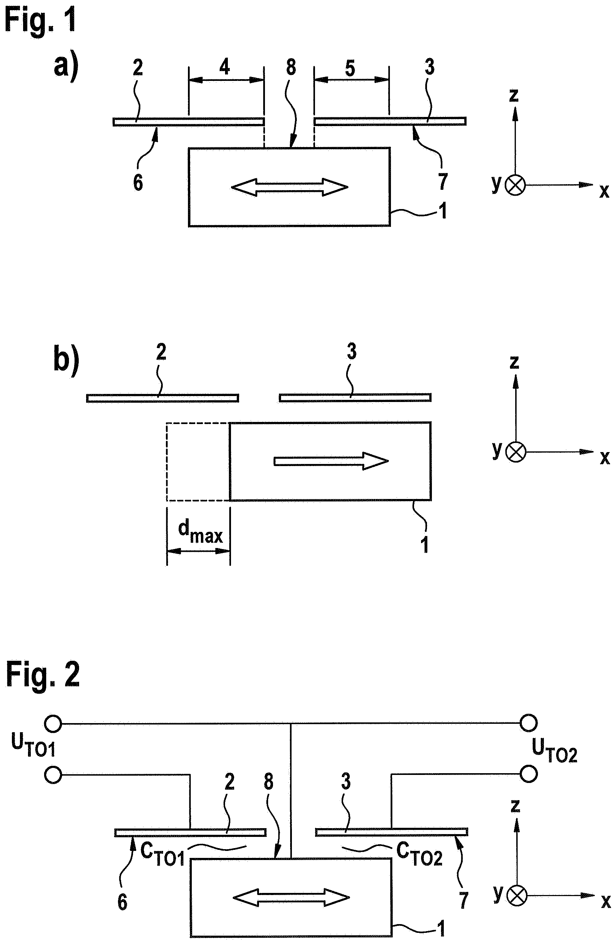

Die in den Fig. 1 bis 10 Ausführungsbeispiele zumindest teilweise dargestellter mikromechanischer Drehratensensoren sind jeweils gegenüber einem kartesischen x-y-z-Koordinatensystem eines Inertialsystems, dessen Drehrate erfasst werden soll, ausgerichtet. Bezüglich dieses Koordinatensystems erfolgt die Antriebsrichtung der wenigstens einen seismischen Masse in x-Richtung und der jeweilig beispielgemäße Drehratensensor ist so ausgebildet, dass er Drehraten zumindest um die z-Achse und/oder y-Achse erfassen kann. Außerdem weisen diese Drehratensensoren eine Fertigungsrichtung bzw. Strukturierungsrichtung in z-Richtung auf, bezüglich der diese aus einem Siliziumwafer herausgebildet sind. Die Trimm-Elektrodenelemente sind bei diesen Ausführungsbeispielen jeweils unbeweglich angeordnet und elektrisch von einander und von der seismischen Masse isoliert ausgebildet und angeordnet. Die Trimm-Elektrodenelemente sind jeweils beispielhaft symmetrisch bzw. paarweise symmetrisch zur zugeordneten seismischen Masse ausgebildet, weshalb des erste bis vierte Konstante Faktor jeweils als 1 angenommen werden kann.

In Fig. 1 a) und b) ist ein beispielgemäßer Drehratensensor veranschaulicht, der ein erstes und ein zweites Trimm-Elektrodenelement 2, 3 aufweist, die gemeinsam seismischer Masse 1 zugeordnet sind. Seismische Masse 1 wird in x-Richtung angetrieben und weist parallel zur x-y-Ebene stets zwei Überlappungsbereiche 4 und 5 einer Trimmfläche 8 der seismischen Masse auf, welche jeweils einer Elektrodenfläche 6, 7 eines Trimm-Elektrodenelements zugeordnet sind. Dies ist auch bei maximaler Auslenkung $d_{max}$ seismischer Masse 1 in x-Richtung der Fall, wie dies in Fig. 1 b) veranschaulicht ist.

Durch Trimmfläche 8 seismischer Masse 1 und die jeweilige Elektrodenfläche 6, 7 des ersten und zweiten Trimm-Elektrodenelements 2 und 3, wobei diese Flächen 6, 7, 8 parallel zur x-y-Ebene ausgebildet sind, werden eine erste Trimm-Kapazität $C_{TO1}$ und eine zweite Trimm-Kapazität $C_{TO2}$ gebildet. Die erste und zweite Trimmspannung $U_{T01}$ und $U_{T02}$ sind wie in Fig. 2 dargestellt an diese Kapazitäten angelegt.

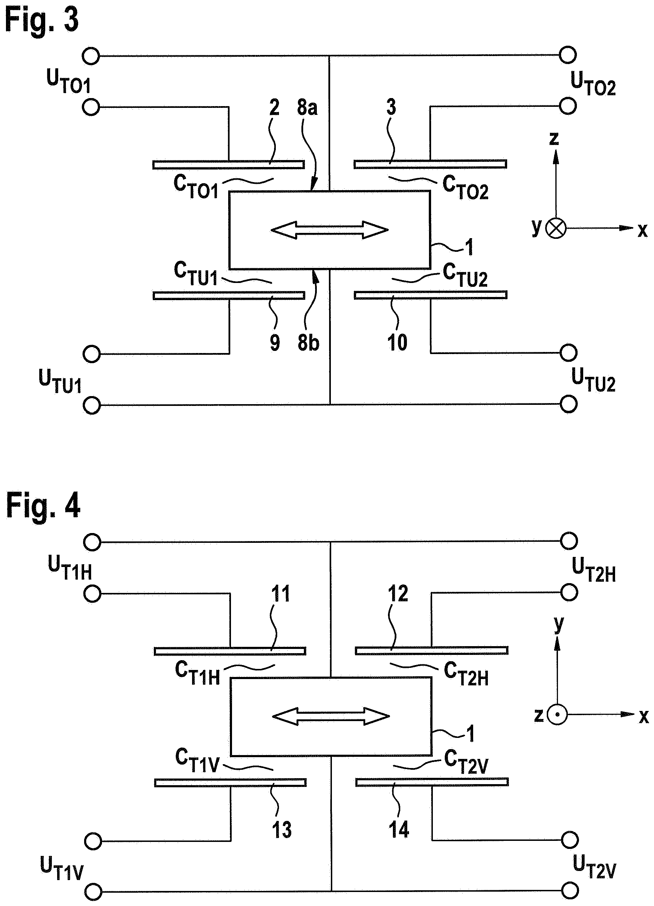

Fig. 3 zeigt ein Ausführungsbeispiel eines Drehratensensors, welcher in z-Richtung oberhalb und unterhalb seismischer Masse 1 Trimm-Elektrodenelemente 2, 3, 9, 10 aufweist, die jeweils paarweise einer Trimmfläche 8a und 8b seismischer Masse 1, parallel zur x-y-Ebene, zugeordnet sind und jeweils mit dieser die Trimm-Kapazitäten $C_{TO1}$, $C_{TO2}$ $C_{TU1}$, $C_{TU2}$ bilden, an welche die Trimmspannungen $U_{TO1}$, $U_{TU2}$ als erste Trimmspannungen und $U_{TO2}$, $U_{TU1}$ als zweite Trimmspannungen angelegt werden.

Die Ausführungsbeispiele, welche anhand der Fig. 1 bis 3 veranschaulicht sind, sind zur Unterdrückung unerwünschter Auslenkungen der seismischen Masse in Ausleserichtung, senkrecht zur Antriebsrichtung (x-Richtung) und senkrecht zur x-y- Ebene ausgelegt.

In Fig. 4 ist ein beispielhafter Drehratensensor mit vier Trimm-Elektrodenelementen 11, 12, 13 und 14 dargestellt, welche mit ihren Elektrodenflächen parallel zur x-z-Ebene ausgebildet sind. Hierbei sind Trimm-Elektrodenelemente 11, 12, 13, 14 sowie seismische Masse 1 so ausgebildet und angeordnet, dass seismische Masse 1 auch bei ihrer maximalen Auslenkung in der x-z-Ebene stets einen gemeinsamen Überlappungsbereich mit jeder ihr zugeordneten Elektrodefläche aufweist. Die Trimm-Elektrodenelemente 11, 12, 13, 14 sind jeweils um eine definierte Länge in y-Richtung von seismischer Masse 1 bezüglich ihres unausgelenkten Zustandes angeordnet und bilden mit seismischer Masse 1 vier Trimm-Kapazitäten $C_{T1H}$, $C_{T2H}$, $C_{T1V}$ und $C_{T2V}$ aus, an welche elektrische Trimmspannungen $U_{T1H}$, $U_{T2V}$ als erste Trimmspannungen und $U_{T2H}$, $U_{T1V}$ als zweite Trimmspannungen angelegt werden.

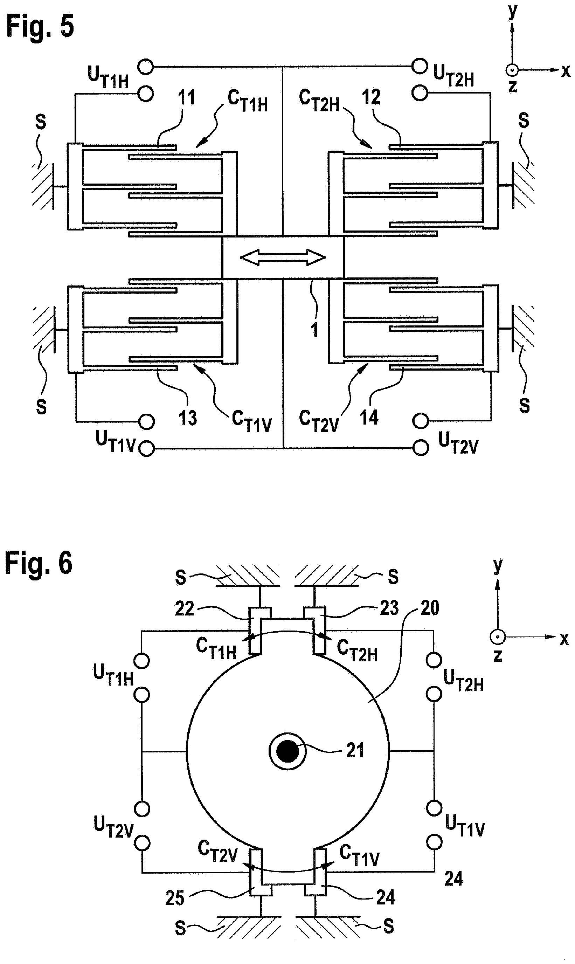

Fig. 5 zeigt ein Ausführungsbeispiel des Drehratensensors aus Fig. 4, bei welchem Trimm-Elektrodenelemente 11, 12, 13 und 14 als Kammstrukturen ausgebildet sind, von denen seismische Masse 1 entsprechende Gegenstücke aufweist, wobei Trimm-Elektrodenelemente 11, 12, 13, 14 jeweils an Substrat S aufgehängt sind. Zwischen diesen Kammstrukturen der Trimm-Elektrodenelemente und den Kammstrukturen der seismischen Masse 1 bilden sich die Trimm-Kapazitäten $C_{T1H}$, $C_{T2H}$, $C_{T1V}$, $C_{T2V}$ aus, an denen die Trimmspannungen $U_{T1H}$, $U_{T2V}$ als erste Trimmspannungen und $U_{T2H}$, $U_{T1V}$ als zweite Trimmspannungen angelegt werden.

Die Ausführungsbeispiele, welche anhand der Fig. 4 und 5 veranschaulicht sind, sind zur Unterdrückung unerwünschter Auslenkungen der seismischen Masse senkrecht zur Antriebsrichtung (x-Richtung) und innerhalb der Schwingungsebene (x-y-Ebene), welche von der Antriebs- und der Auslesemode auf gespannt wird, ausgelegt.

In einem nicht dargestellten Ausführungsbeispiel des Drehratensensors als 2-achsiger Drehratensensor, also ein Drehratensensor der sensitiv für Drehraten um zwei Achsen ist, weist dieser acht Trimm-Elektrodenelemente auf, von denen vier jeweils Elektrodenflächen parallel zur x-y-Ebene, zwei oberhalb, zwei unterhalb der seismischen Masse angeordnet, und vier jeweils Elektrodenflächen parallel zur x-z-Ebene, zwei vor und zwei hinter der seismischen Masse angeordnet, aufweisen. Diese Trimm-Elektrodenelemente sind dabei einer seismischen Masse gemeinsam zugeordnet.

In Fig. 6 ist ein Ausführungsbeispiel eines Drehratensensors veranschaulicht, der eine zylinderförmige seismische Masse 20 aufweist, die an einer Torsionsfeder 21 rotatorisch auslenkbar um die z-Achse aufgehängt ist. Zusätzlich ermöglicht Torsionsfeder 21 rotatorische Auslenkungen seismischer Masse 20 um die x-Achse. Die Antriebsmode dieses Ausführungsbeispiels schwingt rotatorisch um die z-Achse und die Auslesemode schwingt rotatorisch um die x-Achse, wobei die gegenüberliegenden Ränder seismischer Masse 20 gegenphasig in z-Richtung ausgelenkt werden. Trimm-Elektrodenelemente 22, 23, 24 und 25 sind dabei an Substrat S bzw. dem Inertialsystem aufgehängt, in z-Richtung unterhalb seismischer Masse 20 angeordnet und dieser zugeordnet und bilden mit dieser Trimm-Kapazitäten $C_{T1H}$, $C_{T2H}$, $C_{T1V}$, $C_{T2V}$ aus, an denen die Trimmspannungen $U_{T1H}$, $U_{T2V}$ als erste Trimmspannungen und $U_{T2H}$, $U_{T1V}$ als zweite Trimmspannungen angelegt werden.

In einem nicht dargestellten Ausführungsbeispiel sind vier Trimm-Elektrodenelemente entsprechend den Trimm-Elektrodenelementen aus Fig. 6 in z-Richtung oberhalb der seismischen Masse zugeordnet. In einem weiteren, alternativen, nicht dargestellten Ausführungsbeispiel sind der seismischen Masse acht Trimm-Elektrodenelemente gemeinsam zugeordnet, vier unterhalb und vier oberhalb der seismischen Masse bezüglich der z-Richtung.

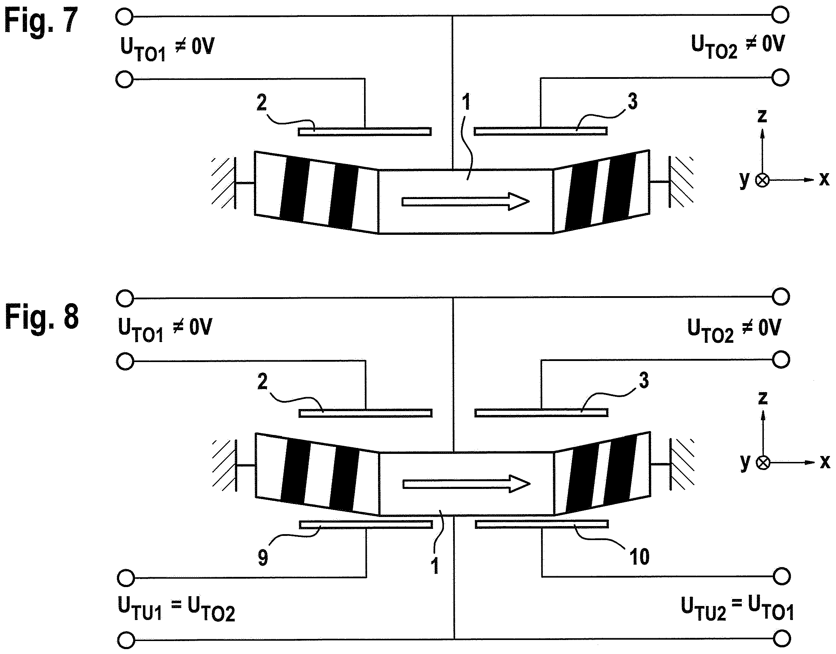

Der in Fig. 7 beispielhaft veranschaulichte Drehratensensor weist lediglich ein erstes und ein zweites Trimm-Elektrodenelement 2, 3 auf, welche gemeinsam seismischer Masse 1 zugeordnet sind und somit Trimm-Kapazitäten $C_{TO1}$ und $C_{TO2}$ ausbilden, an welchen die erste elektrische Trimmspannung $U_{TO1}$ und die zweite Trimmspannung $U_{TO2}$ anliegen. Diese beiden Trimmspannungen werden jeweils zumindest in Abhängigkeit eines Quadraturparameters und eines Resonanzparameters im Rahmen eines beispielgemäßen Verfahrens eingestellt. Trimmspannungen $U_{TO1}$ und $U_{TO2}$ werden als Gleichspannungen unabhängig einer möglichen Quadratur an Trimm-Kapazitäten $C_{TO1}$ und $C_{TO2}$ angelegt. Dazu sind Trimm-Elektrodenelemente 2, 3 beispielgemäß jeweils mit einer elektrischen Spannungsquelle verbunden und seismische Masse 1 mit der elektrischen Masse. Gemäß der Gleichung

$$U_f{}^2 = U_{TO1}{}^2 + U_{TO2}{}^2 \quad (1)$$

werden Trimmspannungen $U_{TO1}$ und $U_{TO2}$ in Abhängigkeit des Resonanzparameters $U_f$ eingestellt. Hierdurch wird die Resonanzfrequenz des Drehratensensors gezielt verschoben. Falls der Drehratensensor keine Quadratur bzw. kein Quadratursignal aufweist, werden die Trimmspannungen $U_{TO1}$ und $U_{TO2}$ auf gleich Werte eingestellt. Es gilt dann also

$$U_{TO1} = U_{TO2} \text{ und } U_f{}^2 = 2\, U^2{}_{TO1} \quad (2).$$

Falls der Drehratensensor allerdings eine Quadratur bzw. ein Quadratursignal aufweist, wird dieses zusätzlich durch die Trimmspannungen eliminiert. Quadraturparameter $U_T$ ist dabei ein Maß für die zur Eliminierung der Quadratur erforderliche elektrische Spannung. In Abhängigkeit des Quadraturparameters $U_T$ werden Trimmspannungen $U_{TO1}$ und $U_{TO2}$ gemäß der Gleichung

$$U_T{}^2 = U_{TO1}{}^2 - U_{TO2}{}^2 \quad (3)$$

eingestellt, wodurch die Quadratur eliminiert wird.

Im Fall, dass der Drehratensensor eine maximal trimmbare Quadratur aufweist, werden die Trimmspannungen im Grenzwert nach folgenden Zusammenhängen eingestellt:

$$U_T{}^2 = U_{TO2}{}^2 \quad \text{und} \quad U_{TO1}{}^2 = 0$$

Die Höhe der maximal anlegbaren Trimmspannung hängt von der maximal verfügbaren Elektrodenfläche und dem maximal zu erwartenden Quadratursignal ab. Für den Fall eines hinsichtlich des Beispiels inversen Quadratursignals werden die Trimmspannungen vertauscht angelegt. Gemäß Gleichungen (1) und (3) werden die Trimmspannungen wie folgt eingestellt

$$U_{TO1}{}^2 = (U_T{}^2 + U_f{}^2)/2 \quad (5)$$

und

$$U_{TO2}{}^2 = (U_f{}^2 - U_T{}^2)/2. \quad (6)$$

Das in Fig. 8 dargestellte Ausführungsbeispiel basiert auf dem in Fig. 7 gezeigten Ausführungsbeispiel, ist allerdings dabei um zwei zusätzliche Trimm-Elektrodenelemente 9 und 10, welche in z-Richtung unterhalb seismischer Masse 1 angeordnet sind, ergänzt. Diese bilden zusätzliche Trimm-Kapazitäten $C_{TU1}$ und $C_{TU2}$ mit seismischer Masse 1 aus. Dabei ist an Trimm-Kapazität $C_{TU1}$ Trimmspannung $U_{TU1} = U_{TO2}$, also die selbe Trimmspannung wie an Trimm-Kapazität $C_{TO2}$ angelegt und an Trimm-Kapazität $C_{TU2}$ Trimmspannung $U_{TO2} = U_{TO1}$, also die selbe Trimmspannung wie an Trimm-Kapazität $C_{TO1}$. Die Trimmspannungen $U_{TO1}$, $U_{TO2}$, $U_{TU1}$, und $U_{TO2}$ werden dabei beispielgemäß wie durch Gleichungen (5) und (6) definiert gewählt, und damit in Abhängigkeit des Quadraturparameters $U_T$ und des Resonanzparameters $U_f$ zur Eliminierung der Quadratur des Drehratensensors bei gleichzeitiger Einstellung einer definierten Resonanzfrequenz der Auslesemode des Drehratensensors eingestellt.

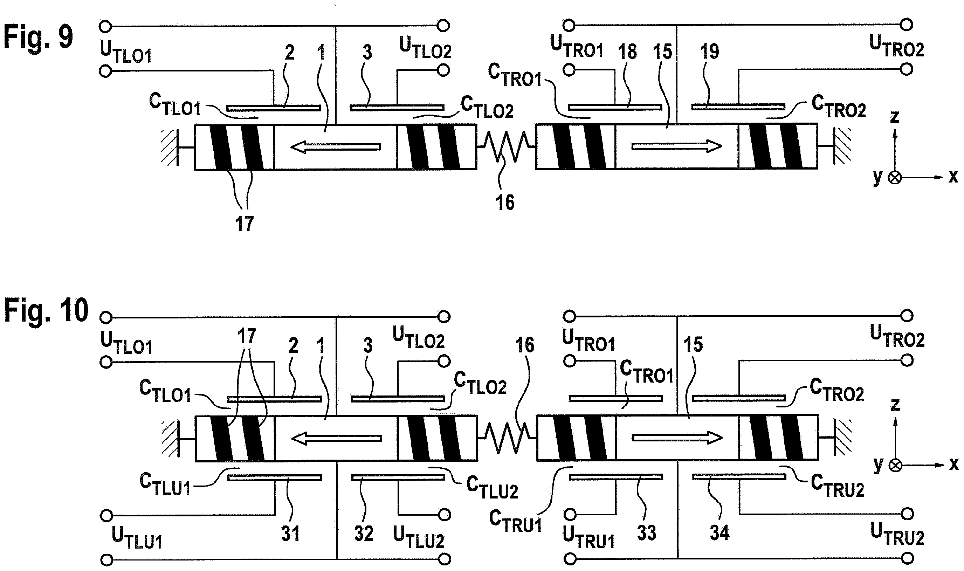

In Fig. 9 und 10 ist jeweils ein Ausführungsbeispiel eines Drehratensensors dargestellt, welcher zwei seismische Massen 1 und 15 aufweist, die miteinander über ein Kopplungselement 16, beispielgemäß als Feder ausgebildet, gekoppelt sind. Seismische Massen 1 und 15 werden dabei gegenphasig angetrieben und weisen somit eine gegenphasige Antriebsmode aus, wodurch der gemeinsame Schwerpunkt in Ruhe bleibt und die beiden seismischen Massen 1, 15 eine gemeinsame Resonanzfrequenz bezüglich jeweils der Antriebsmode und der Auslesemode aufweisen. Die Aufhängungs-Federelemente 17 der seismischen Massen 1, 15 sind beispielgemäß in dieselbe Richtung gekippt. Die Trimmspannungen an den jeweiligen Trimm-Kapazitäten $C_{TLO1}$, $C_{TL02}$, $C_{TRO1}$ und $C_{TR02}$ zwischen Trimm-Elektrodenelementen 2, 3 und seismischer Masse 1 sowie zwischen Trimm-Elektrodenelementen 18, 19 und seismischer Masse 15 werden jeweils paarweise identisch eingestellt, also die ersten Trimmspannungen an $C_{TLO1}$ und $C_{TRO1}$, $U_{TLO1}$, $U_{TR01}$ sowie die zweiten Trimmspannungen an $C_{TLO2}$ und $C_{TR02}$, $U_{TLO2}$, $U_{TRO2}$ werden paarweise identisch eingestellt. Das anhand der Fig. 10 veranschaulichte Ausführungsbeispiel weist zusätzlich jeweils zwei Trimm-Elektrodenelemente 31, 32, 33 und 34 in z-Richtung unterhalb der seismischen Massen 1 und 15 auf. Dabei werden die erste und die zweite Trimmspannung wie folgt eingestellt:

erste Trimmspannung: $U_{TLO1} = U_{TRO1} = U_{TLU2} = U_{TRU2}$,
zweite Trimmspannung: $U_{TLO2} = U_{TRO2} = U_{TLU1} = U_{TRU1}$.

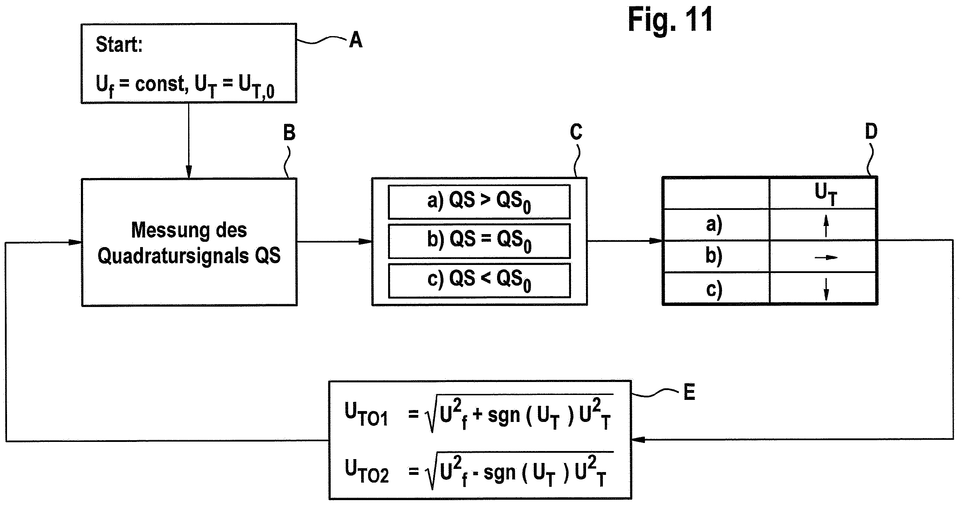

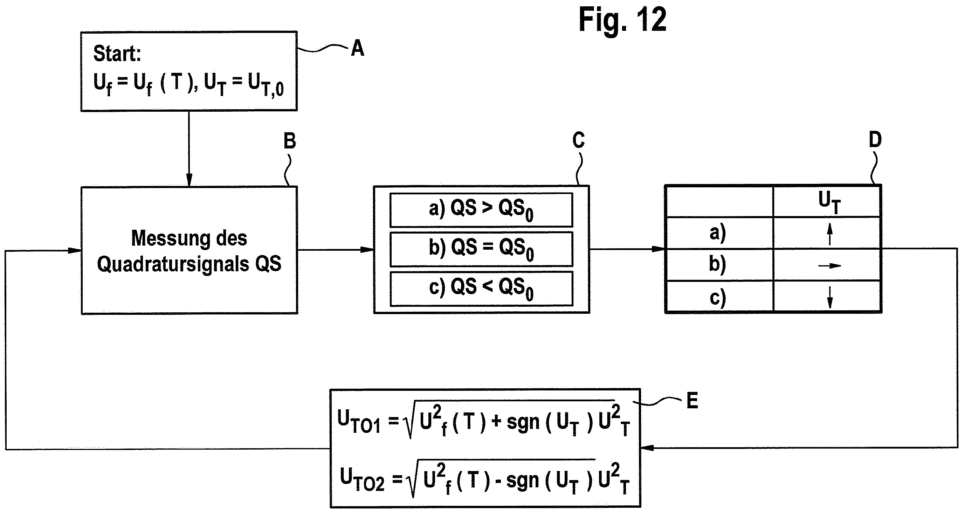

In Fig. 11 und 12 sind zwei beispielhafte Diagramme dargestellt, welche die Regelung der ersten und zweiten Trimmspannung anhand des Quadraturparameters $U_T$ und des Resonanzparameters $U_f$ veranschaulichen. Zu Beginn "Start", Funktionsblock A sind der Quadraturparameter $U_T$ und der Resonanzparameter $U_f$ definiert. Mittels der in Fig. 11 und Fig.12 dargestellten Regelungen wird lediglich eine Quadraturtrimmung/ - regelung durchgeführt und die Resonanzfrequenz/Frequenz der Auslesemode bleibt mittels des Verfahrens im Wesentlichen unbeeinflusst. In Fig. 11 weist der Resonanzparameters $U_f$ einen definierten Konstantwert auf und in Fig. 12 ändert sich $U_f$ in Abhängigkeit der Temperatur. Der Quadraturparameter $U_T$, welcher abhängig vom Quadratursignal des Drehratensensors ist, weist einen

EP 2 425 206 B1

konstanten Startwert auf, welcher beispielsweise auch 0 sein kann. Anschließend wird in Funktionsblock B das Quadratursignal QS gemessen, welches als um 180° bzw. 0° zur Antriebsmode phasenverschobener Anteil des Auslesesignals bzw. als um 90° bzw. 270° zu dem die Drehrate abbildenden Signalanteil bzw. Nutzsignal des Auslesesignals phasenverschoben ist, erfasst und entsprechend gewonnen wird. Danach wird in Funktionsblock C eine Beurteilung vorgenommen, ob das gemessene Quadratursignal QS größer oder kleiner oder gleich einem Schwellwert, beispielsweise 0, ist. Abhängig davon, wird anschließend in Funktionsblock D der Quadraturparameter $U_T$ erhöht oder vermindert oder gleich gelassen, was beispielsweise durch eine Addition und/oder Multiplikation mit einer Funktion und/oder einem definierten Wert durchgeführt wird. Hiernach werden in Funktionsblock E gemäß den dargestellten Formeln, wobei sgn als die Signumfunktion definiert ist, die Trimmspannungen $U_{T01}$ und $U_{T02}$ jeweils in Abhängigkeit des Quadraturparameters $U_T$ und des Resonanzparameters $U_f$ an die Trimmkapazitäten des Drehratensensors angelegt. Diese Ansteuerungsfunktionen bilden dabei Stellgrößen der Regelung. Anschließend wird wieder Funktionsblock B ausgeführt und die nachfolgende Regelschleife beginnt.

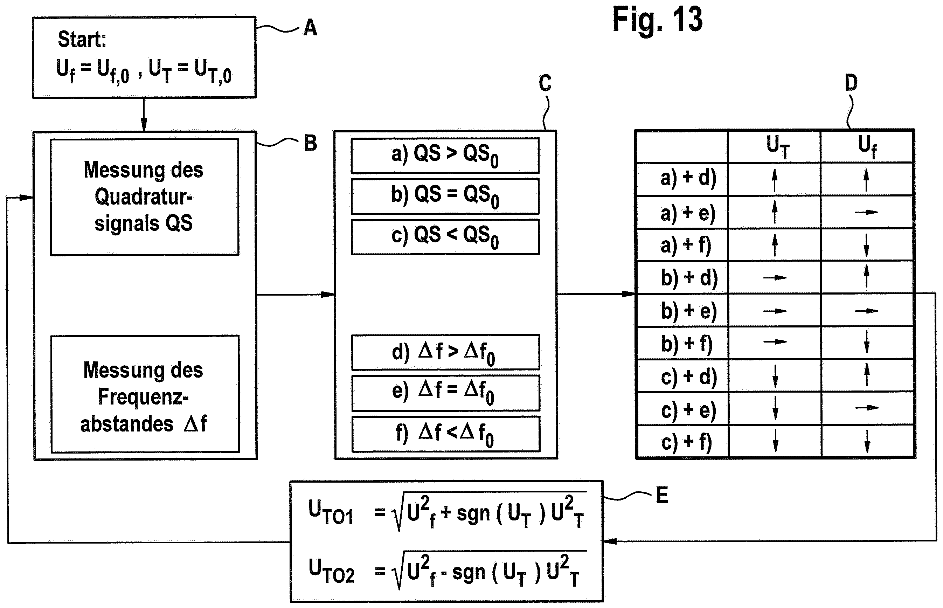

In dem schematischen, beispielhaften Verfahrensdiagramm aus Fig. 13 starten beide Parameter $U_f$ und $U_T$ mit einem definierten Wert in Funktionsblock A. Anschließend wird in Funktionsblock B das Quadratursignal QS gemessen sowie die Frequenzdifferenz $\Delta f$ zwischen der Auslesemode und der Antriebsmode. Danach werden diese Werte QS, $\Delta f$ in Funktionsblock C jeweils mit definierten Schwellwerten verglichen, wonach in Funktionsblock D Quadraturparameter $U_T$ und Resonanzparameter $U_f$ angepasst werden, entsprechend den jeweiligen Vergleichsergebnissen a), b), c), d), e), f) wie in Funktionsblock D veranschaulicht. Diese Anpassung umfasst eine Erhöhung oder Verminderung oder nicht Beeinflussung der Parameter $U_T$ und $U_f$, wobei beispielsweise eine oder mehrere Addition/Subtraktion und/oder Multiplikationen mit einem oder mehreren definierten Konstanten und/oder Funktionen durchgeführt werden. Hiernach werden in Funktionsblock E gemäß den dargestellten Formeln, wobei sgn als die Signumfunktion definiert ist, die Trimmspannungen $U_{T01}$ und $U_{T02}$ jeweils in Abhängigkeit des Quadraturparameters $U_T$ und des Resonanzparameters $U_f$ an die Trimmkapazitäten des Drehratensensors angelegt. Hierdurch kann in Abhängigkeit der Anpassung der Parameter $U_T$ und $U_f$ sowohl eine Quadraturunterdrückung durchgeführt werden als auch gleichzeitig mittels derselben Trimm-Elektrodenelemente und Trimmspannungen eine Frequenzanpassung bzw. Frequenzverschiebung der Auslesemode durchgeführt werden. Anschließend wird wieder Funktionsblock B ausgeführt und die nachfolgende Regelschleife beginnt.

Bei den in den Fig. 11 bis 13 dargestellten Ausführungsbeispielen wird angenommen bzw. vorausgesetzt, dass eine Erhöhung des Quadraturparameters $U_T$ zum Quadrat zu einer Reduzierung des Quadratursignals QS führt und dass der beispielhafte Drehratensensor entsprechend ausgebildet ist.


## Patentansprüche

1.   Verfahren zum präzisen Messbetrieb eines mikromechanischen Drehratensensors, umfassend zumindest eine auslenkbar aufgehängte seismische Masse (1, 15, 20), wenigstens eine Antriebseinrichtung zum Antreiben der seismischen Masse (1, 15, 20) und mindestens ein erstes (2, 11, 18) und ein zweites (3, 12, 19) Trimm-Elektrodenelement, welche der seismischen Masse (1, 15, 20) direkt oder indirekt gemeinsam zugeordnet sind, wobei zwischen dem ersten Trimm-Elektrodenelement (2, 11, 18) und der seismischen Masse (1, 15, 20) eine erste elektrische Trimmspannung ($U_{TO1}$, $U_{TLO1}$, $U_{TRO1}$, $U_{TU2}$, $U_{T1H}$, $U_{T2V}$) sowie zwischen dem zweiten Trimm-Elektrodenelement (3, 12, 19) und der seismischen Masse (1, 15, 20) eine zweite elektrische Trimmspannung ($U_{TO2}$, $U_{TLO2}$, $U_{TRO2}$, $U_{TU1}$, $U_{T2H}$, $U_{T1V}$) eingestellt werden, wobei
die erste und die zweite elektrische Trimmspannung zumindest in Abhängigkeit eines Quadraturparameters ($U_T$) und eines Resonanzparameters ($U_f$) eingestellt werden,
**dadurch gekennzeichnet, dass** die Einstellung der ersten und zweiten Trimmspannung mittels einer Regelung erfolgt, wobei die erste ($U_{TO1}$, $U_{TLO1}$, $U_{TRO1}$, $U_{TU2}$, $U_{T1H}$, $U_{T2V}$) und die zweite ($U_{TO2}$, $U_{TLO2}$, $U_{TRO2}$, $U_{TU1}$, $U_{T2H}$, $U_{T1V}$) elektrische Trimmspannung so eingestellt werden, dass die Summe, aus dem Quadrat der ersten elektrischen Trimmspannung ($U_{TO1}$, $U_{TLO1}$, $U_{TRO1}$, $U_{TU2}$, $U_{T1H}$, $U_{T2V}$) multipliziert mit einem ersten konstanten Faktor ($\alpha$) und aus dem Quadrat der zweiten elektrischen Trimmspannung ($U_{TO2}$, $U_{TLO2}$, $U_{TRO2}$, $U_{TU1}$, $U_{T2H}$, $U_{T1V}$) multipliziert mit einem zweiten konstanten Faktor ($\beta$), auf einen ersten Referenzwert des Resonanzparameters ($U_f$) zum Quadrat eingestellt wird und dass zusätzlich die Differenz, aus dem Quadrat der ersten elektrischen Trimmspannung ($U_{TO1}$, $U_{TLO1}$, $U_{TRO1}$, $U_{TU2}$, $U_{T1H}$, $U_{T2V}$) multipliziert mit einem dritten konstanten Faktor ($\gamma$) und aus dem Quadrat der zweiten elektrischen Trimmspannung ($U_{TO2}$, $U_{TLO2}$, $U_{TRO2}$, $U_{TU1}$, $U_{T2H}$, $U_{T1V}$) multipliziert mit einem vierten konstanten Faktor ($\delta$), auf einen ersten Referenzwert des Quadraturparameters ($U_T$) zum Quadrat eingestellt wird, wobei der Quadraturparameter ($U_T$) zu definierten Zeiten und/oder periodisch und/oder ständig in Abhängigkeit und/oder aus einem Quadratursignal ermittelt wird und der Resonanzparameter ($U_f$) zu definierten Zeiten und/oder periodisch und/oder ständig in Abhängigkeit und/oder aus einer Frequenz einer Auslesemode oder aus einer Frequenzdifferenz zwischen einer Auslesemode und einer Antriebsmode ermittelt wird, wobei der Quadraturparameter eine Stellgröße in der Regelung ist.

2. Verfahren zum präzisen Messbetrieb eines mikromechanischen Drehratensensors, umfassend zumindest eine auslenkbar aufgehängte seismische Masse (1, 15, 20), wenigstens eine Antriebseinrichtung zum Antreiben der seismischen Masse (1, 15, 20) und mindestens ein erstes (2, 11, 18) und ein zweites (3, 12, 19) Trimm-Elektrodenelement, welche der seismischen Masse (1, 15, 20) direkt oder indirekt gemeinsam zugeordnet sind, wobei zwischen dem ersten Trimm-Elektrodenelement (2, 11, 18) und der seismischen Masse (1, 15, 20) eine erste elektrische Trimmspannung ($U_{TO1}$, $U_{TLO1}$, $U_{TRO1}$, $U_{TU2}$, $U_{T1H}$, $U_{T2V}$) sowie zwischen dem zweiten Trimm-Elektrodenelement (3, 12, 19) und der seismischen Masse (1, 15, 20) eine zweite elektrische Trimmspannung ($U_{TO2}$, $U_{TLO2}$, $U_{TRO2}$, $U_{TU1}$, $U_{T2H}$, $U_{T1V}$) eingestellt werden, wobei die erste und die zweite elektrische Trimmspannung zumindest in Abhängigkeit eines Quadraturparameters ($U_T$) und eines Resonanzparameters ($U_f$) eingestellt werden, **dadurch gekennzeichnet, dass** die Einstellung der ersten und zweiten Trimmspannung mittels einer Regelung erfolgt, wobei die erste ($U_{TO1}$, $U_{TLO1}$, $U_{TRO1}$, $U_{TU2}$, $U_{T1H}$, $U_{T2V}$) und die zweite ($U_{TO2}$, $U_{TLO2}$, $U_{TRO2}$, $U_{TU1}$, $U_{T2H}$, $U_{T1V}$) elektrische Trimmspannung so eingestellt werden, dass die Summe, aus der ersten elektrischen Trimmspannung ($U_{TO1}$, $U_{TLO1}$, $U_{TRO1}$, $U_{TU2}$, $U_{T1H}$, $U_{T2V}$) multipliziert mit einem ersten konstanten Faktor ($\alpha$) und aus der zweiten elektrischen Trimmspannung ($U_{TO2}$, $U_{TLO2}$, $U_{TRO2}$, $U_{TU1}$, $U_{T2H}$, $U_{T1V}$) multipliziert mit einem zweiten konstanten Faktor ($\beta$), auf einen ersten Referenzwert des Resonanzparameters ($U_f$) eingestellt wird und dass zusätzlich die Differenz, aus der ersten elektrischen Trimmspannung ($U_{TO1}$, $U_{TLO1}$, $U_{TRO1}$, $U_{TU2}$, $U_{T1H}$, $U_{T2V}$) multipliziert mit einem dritten konstanten Faktor ($\gamma$) und der zweiten elektrischen Trimmspannung ($U_{TO2}$, $U_{TLO2}$, $U_{TRO2}$, $U_{TU1}$, $U_{T2H}$, $U_{T1V}$) multipliziert mit einem vierten konstanten Faktor ($\delta$), auf einen ersten Referenzwert des Quadraturparameter ($U_T$) eingestellt wird, wobei der Quadraturparameter ($U_T$) zu definierten Zeiten und/oder periodisch und/oder ständig in Abhängigkeit und/oder aus einem Quadratursignal ermittelt wird und der Resonanzparameter ($U_f$) zu definierten Zeiten und/oder periodisch und/oder ständig in Abhängigkeit und/oder aus einer Frequenz einer Auslesemode oder aus einer Frequenzdifferenz zwischen einer Auslesemode und einer Antriebsmode ermittelt wird, wobei der Quadraturparameter eine Stellgröße in der Regelung ist.

3. Verfahren nach einem der Ansprüche 1 bis 2, **dadurch gekennzeichnet, dass** der erste ($\alpha$), der zweite ($\beta$), der dritte ($\gamma$) und der vierte ($\delta$) konstante Faktor einen positiven Wert aufweisen, welcher jeweils wenigstens abhängig von einer ersten ($C_{TO1}$, $C_{TLO1}$, $C_{TRO1}$) und einer zweiten Trimm-Kapazität ($C_{TO2}$, $C_{TLO2}$, $C_{TRO2}$) ist, wobei die erste Trimm-Kapazität ($C_{TO1}$, $C_{TLO1}$, $C_{TRO1}$) zumindest abhängig ist von der jeweiligen Ausbildung des ersten Trimm-Elektrodenelements (2, 11, 18) und der seismischen Masse (1, 15, 20) sowie deren Anordnung und Relativbewegungsverhalten zueinander und wobei die zweite Trimm-Kapazität ($C_{TO2}$, $C_{TLO2}$, $C_{TRO2}$) wenigstens abhängig ist von der jeweiligen Ausbildung des zweiten Trimm-Elektrodenelements (3, 12, 19) und der seismischen Masse (1, 15, 20) sowie deren Anordnung und Relativbewegungsverhalten zueinander.

4. Verfahren nach einem der Ansprüche 1 bis 3, **dadurch gekennzeichnet, dass** dieses ein Regelungsverfahren umfasst, durch welches der Resonanzparameter ($U_f$) oder der erste Referenzwert des Resonanzparameters in zeitlicher Abhängigkeit wenigstens eines zusätzlichen Parameters des Drehratensensors und/oder eines zusätzlichen Parameters, der den Betrieb des Drehratensensors beeinflusst, vorgegeben wird, wobei dieser zusätzliche Parameter insbesondere die im Drehratensensor und/oder in dessen direkter Umgebung vorherrschende Temperatur ist.

5. Verfahren nach einem der Ansprüche 1 bis 4, **dadurch gekennzeichnet, dass** zumindest das erste Trimm-Elektrodenelement (2, 11, 18) an eine erste elektrische Spannungsquelle angeschlossen ist und das zweite Trimm-Elektrodenelement (3, 12, 19) und/oder die seismische Masse (1, 15, 20) an eine zweite elektrische Spannungsquelle angeschlossen ist/sind.

6. Verfahren nach einem der Ansprüche 1 bis 4, **dadurch gekennzeichnet, dass** das erste (2) und das zweite (3) Trimm-Elektrodenelement jeweils zumindest eine Elektrodenfläche (6, 7) aufweisen, welche einer Trimmfläche (8) der seismischen Masse (1) im Wesentlichen parallel gegenüberliegend angeordnet sind und wobei die Elektrodenflächen des ersten (6) und zweiten (7) Trimm-Elektrodenelements stets einem gegenüberliegenden Bereich (4, 5) der Trimmfläche der seismischen Masse zugeordnet sind und/oder diesen jeweils überlappen, insbesondere unabhängig vom Auslenkungszustand der seismischen Masse (1), zumindest bis zu einer definierten Amplitude/Auslenkung.

7. Mikromechanischer Drehratensensor , umfassend zumindest eine auslenkbar aufgehängte seismische Masse (1, 15, 20), wenigstens eine Antriebseinrichtung zum Antreiben der seismischen Masse und zumindest ein erstes (2, 11, 18) und ein zweites (3, 12, 19) Trimm-Elektrodenelement, welche der seismischen Masse (1, 15, 20) direkt oder indirekt gemeinsam zugeordnet sind, wobei insbesondere zumindest das erste Trimm-Elektrodenelement (2, 11, 18) an eine erste elektrische Spannungsquelle angeschlossen ist und das zweite Trimm-Elektrodenelement (3, 12, 19) und/oder die seismische Masse an eine zweite elektrische Spannungsquelle (1, 15, 20) angeschlossen ist/sind, und wobei zwischen dem erstem Trimm-Elektrodenelement (2, 11, 18) und der seismischen Masse (1, 15, 20) eine erste elektrische Trimmspannung ($U_{TO1}$, $U_{TLO1}$, $U_{TRO1}$, $U_{TU2}$, $U_{T1H}$, $U_{T2V}$) sowie zwischen dem zweiten Trimm-Elektrodenelement (3, 12, 19) und der seismischen Masse (1, 15, 20) eine zweite elektrische Trimmspannung ($U_{TO2}$, $U_{TLO2}$, $U_{TRO2}$, $U_{TU1}$, $U_{T2H}$, $U_{T1V}$) eingestellt wird, **dadurch gekennzeichnet, dass** der Drehratensensor so ausgebildet ist, dass er zur Durchführung des Verfahrens gemäß einem der Ansprüche 1 bis 6 geeignet ist.

**8.** Verwendung des Drehratensensors gemäß Anspruch 7 in Kraftfahrzeugen, insbesondere in einem Kraftfahrzeugregelungssystem.


**Claims**

**1.** Method for the precise measuring operation of a micromechanical rotation rate sensor, comprising at least one deflectively suspended seismic mass (1, 15, 20), at least one drive device for driving the seismic mass (1, 15, 20) and at least one first (2, 11, 18) and one second (3, 12, 19) trimming electrode element, which are jointly assigned directly or indirectly to the seismic mass (1, 15, 20), a first electrical trimming voltage ($U_{TO1}$, $U_{TLO1}$, $U_{TRO1}$, $U_{TU2}$, $U_{T1H}$, $U_{T2V}$) being set between the first trimming electrode element (2, 11, 18) and the seismic mass (1, 15, 20), and a second electrical trimming voltage ($U_{TO2}$, $U_{TLO2}$, $U_{TRO2}$, $U_{TU1}$, $U_{T2H}$, $U_{T1V}$) being set between the second trimming electrode element (3, 12, 19) and the seismic mass (1, 15, 20), wherein the first and the second electrical trimming voltages are set at least as a function of a quadrature parameter ($U_T$) and a resonance parameter ($U_f$), **characterized in that** the setting of the first and second trimming voltages is performed by means of a control system, wherein the first ($U_{TO1}$, $U_{TLO1}$, $U_{TRO1}$, $U_{TU2}$, $U_{T1H}$, $U_{T2V}$) and the second ($U_{TO2}$, $U_{TLO2}$, $U_{TRO2}$, $U_{TU1}$, $U_{T2H}$, $U_{T1V}$) electrical trimming voltages are set so that the sum of the square of the first electrical trimming voltage ($U_{TO1}$, $U_{TLO1}$, $U_{TRO1}$, $U_{TU2}$, $U_{T1H}$, $U_{T2V}$) multiplied by a first constant factor ($\alpha$) and of the square of the second electrical trimming voltage ($U_{TO2}$, $U_{TLO2}$, $U_{TRO2}$, $U_{TU1}$, $U_{T2H}$, $U_{T1V}$) multiplied by a second constant factor ($\beta$) is set to a first reference value of the resonance parameter ($U_f$) in relation to the square, and **in that**, in addition, the difference of the square of the first electrical trimming voltage ($U_{TO1}$, $U_{TLO1}$, $U_{TRO1}$, $U_{TU2}$, $U_{T1H}$, $U_{T2V}$) multiplied by a third constant factor ($\gamma$) and of the square of the second electrical trimming voltage ($U_{TO2}$, $U_{TLO2}$, $U_{TRO2}$, $U_{TU1}$, $U_{T2H}$, $U_{T1V}$) multiplied by a fourth constant factor ($\delta$) is set to a first reference value of the quadrature parameter ($U_T$) in relation to the square, wherein the quadrature parameter ($U_T$) is determined at defined times and/or periodically and/or continuously as a function of and/or from a quadrature signal and the resonance parameter ($U_F$) is determined at defined times and/or periodically and/or continuously as a function of and/or from a frequency of a readout mode or from a frequency difference between a readout mode and a drive mode, wherein the quadrature parameter is a manipulated variable in the control system.

**2.** Method for the precise measuring operation of a micromechanical rotation rate sensor, comprising at least one deflectively suspended seismic mass (1, 15, 20), at least one drive device for driving the seismic mass (1, 15, 20) and at least one first (2, 11, 18) and one second (3, 12, 19) trimming electrode element, which are jointly assigned directly or indirectly to the seismic mass (1, 15, 20), a first electrical trimming voltage ($U_{TO1}$, $U_{TLO1}$, $U_{TRO1}$, $U_{TU2}$, $U_{TIH}$, $U_{T2V}$) being set between the first trimming electrode element (2, 11, 18) and the seismic mass (1, 15, 20), and a second electrical trimming voltage ($U_{TO2}$, $U_{TLO2}$, $U_{TRO2}$, $U_{TU1}$, $U_{T2H}$, $U_{T1V}$) being set between the second trimming electrode element (3, 12, 19) and the seismic mass (1, 15, 20), wherein the first and the second electrical trimming voltages are set at least as a function of a quadrature parameter ($U_T$) and a resonance parameter ($U_f$), **characterized in that** the setting of the first and second trimming voltages is performed by means of a control system, wherein the first ($U_{TO1}$, $U_{TLO1}$, $U_{TRO1}$, $U_{TU2}$, $U_{T1H}$, $U_{T2V}$) and the second ($U_{TO2}$, $U_{TLO2}$, $U_{TRO2}$, $U_{TU1}$, $U_{T2H}$, $U_{T1V}$) electrical trimming voltages are set so that the sum of the first electrical trimming voltage ($U_{TO1}$, $U_{TLO1}$, $U_{TRO1}$, $U_{TU2}$, $U_{T1H}$, $U_{T2V}$) multiplied by a first constant factor ($\alpha$) and of the second electrical trimming voltage ($U_{TO2}$, $U_{TLO2}$, $U_{TRO2}$, $U_{TU1}$, $U_{T2H}$, $U_{T1V}$) multiplied by a second constant factor ($\beta$) is set to a first reference value of the resonance parameter ($U_f$), and **in that**, in addition, the difference of the first electrical trimming voltage ($U_{TO1}$, $U_{TLO1}$, $U_{TRO1}$, $U_{TU2}$, $U_{T1H}$, $U_{T2V}$) multiplied by a third constant factor ($\gamma$) and the second electrical trimming voltage ($U_{TO2}$, $U_{TLO2}$, $U_{TRO2}$, $U_{TU1}$, $U_{T2H}$, $U_{T1V}$) multiplied by a fourth constant factor ($\delta$) is set to a first reference value of the quadrature parameter ($U_T$), wherein the quadrature parameter ($U_T$) is determined at defined times and/or periodically and/or continuously as a function of and/or from a quadrature signal and the resonance parameter ($U_F$) is determined at defined times and/or periodically and/or continuously as a function of and/or from a frequency of a readout mode or from a frequency difference between a readout mode and a drive mode, wherein the quadrature parameter is a manipulated variable in the control system.

3. Method according to one of Claims 1 to 2, **characterized in that** the first ($\alpha$), the second ($\beta$), the third ($\gamma$) and the fourth ($\delta$) constant factors have a positive value that is respectively at least a function of a first ($C_{TO1}$, $C_{TLO1}$, $C_{TRO1}$) and a second trimming capacitor ($C_{TO2}$, $C_{TLO2}$, $C_{TRO2}$), the first trimming capacitor ($C_{TO1}$, $C_{TLO1}$, $C_{TRO1}$) being at least a function of the respective design of the first trimming electrode element (2, 11, 18) and of the seismic mass (1, 15, 20) as well as their arrangement and relative motion behavior relative to one another, and the second trimming capacitor ($C_{TO2}$, $C_{TLO2}$, $C_{TRO2}$) being at least a function of the respective design of the second trimming electrode element (3, 12, 19) and of the seismic mass (1, 15, 20) as well as their arrangement and relative motion behavior relative to one another.

4. Method according to one of Claims 1 to 3, **characterized in that** said method comprises a control method by which the resonance parameter ($U_f$) or the first reference value of the resonance parameter is prescribed as a time function of at least one additional parameter of the rotation rate sensor and/or of an additional parameter that influences the operation of the rotation rate sensor, wherein this additional parameter is particularly the temperature prevailing in the rotation rate sensor and/or in its immediate surroundings.

5. Method according to one of Claims 1 to 4, **characterized in that** at least the first trimming electrode element (2, 11, 18) is connected to a first electrical voltage source and the second trimming electrode element (3, 12, 19) and/or the seismic mass (1, 15, 20) are/is connected to a second electrical voltage source.

6. Method according to one of Claims 1 to 4, **characterized in that** the first (2) and the second (3) trimming electrode elements respectively have at least one electrode surface (6, 7) that are arranged situated opposite a trimming surface (8) of the seismic mass (1) in a substantially parallel fashion, and the electrode surfaces of the first (6) and second (7) trimming electrode elements always being assigned an opposite region (4, 5) of the trimming surface of the seismic mass, and/or respectively overlapping the same, in particular independently of the state of deflection of the seismic mass (1), at least up to a defined amplitude/deflection.

7. Micromechanical rotation rate sensor, comprising at least one deflectively suspended seismic mass (1, 15, 20), at least one drive device for driving the seismic mass and at least one first (2, 11, 18) and one second (3, 12, 19) trimming electrode element, which are jointly assigned directly or indirectly to the seismic mass (1, 15, 20), in particular at least the first trimming electrode element (2, 11, 18) being connected to a first electrical voltage source and the second trimming electrode element (3, 12, 19) and/or the seismic mass being connected to a second electrical voltage source (1, 15, 20), a first electrical trimming voltage ($U_{TO1}$, $U_{TLO1}$, $U_{TRO1}$, $U_{TU2}$, $U_{T1H}$, $U_{T2V}$) being set between the first trimming electrode element (2, 11, 18) and the seismic mass (1, 15, 20), and a second electrical trimming voltage ($U_{TO2}$, $U_{TLO2}$, $U_{TRO2}$, $U_{TU1}$, $U_{T2H}$, $U_{T1V}$) being set between the second trimming electrode element (3, 12, 19) and the seismic mass (1, 15, 20), **characterized in that** the rotation rate sensor is designed such that it is suitable for carrying out the method according to one of Claims 1 to 6.

8. Use of the rotation rate sensor according to Claim 7 in motor vehicles, in particular in a motor vehicle control system.

**Revendications**

1. Procédé de fonctionnement en mesure précis d'un capteur de vitesse de rotation micromécanique, comprenant au moins une masse sismique (1, 15, 20) suspendue pouvant être déviée, au moins un dispositif d'entraînement destiné à entraîner la masse sismique (1, 15, 20) et au moins un premier (2, 11, 18) et un deuxième (3, 12, 19) élément d'électrode d'ajustement, lesquels sont associés ensemble directement ou indirectement à la masse sismique (1, 15, 20), une première tension d'ajustement électrique ($U_{T01}$, $U_{TL01}$, $U_{TR01}$, $U_{TU2}$, $U_{T1H}$, $U_{T2V}$) étant réglée entre le premier élément d'électrode d'ajustement (2, 11, 18) et la masse sismique (1, 15, 20) ainsi qu'une deuxième tension d'ajustement électrique ($U_{T02}$, $U_{TL02}$, $U_{TR02}$, $U_{TU1}$, $U_{T2H}$, $U_{T1V}$) entre le deuxième élément d'électrode d'ajustement (3, 12, 19) et la masse sismique (1, 15, 20),
la première et la deuxième tension d'ajustement étant réglées au moins en dépendance d'un paramètre de quadrature ($U_T$) et d'un paramètre de résonance ($U_f$), **caractérisé en ce que** le réglage de la première et de la deuxième tension d'ajustement s'effectue au moyen d'une régulation, la première ($U_{T01}$, $U_{TL01}$, $U_{TR01}$, $U_{TU2}$, $U_{T1H}$, $U_{T2V}$) et la deuxième ($U_{T02}$, $U_{TL02}$, $U_{TR02}$, $U_{TU1}$, $U_{T2H}$, $U_{T1V}$) tension d'ajustement électrique étant réglées de telle sorte que la somme du carré de la première tension d'ajustement électrique ($U_{T01}$, $U_{TL01}$, $U_{TR01}$, $U_{TU2}$, $U_{T1H}$, $U_{T2V}$) multiplié par un premier facteur constant ($\alpha$) et du carré de la deuxième tension d'ajustement électrique ($U_{T02}$, $U_{TL02}$, $U_{TR02}$, $U_{TU1}$, $U_{T2H}$, $U_{T1V}$) multiplié par un deuxième facteur constant ($\beta$) est réglée à une première valeur de référence du paramètre de résonance ($U_f$) au carré et qu'en plus la différence du carré de la première tension d'ajustement électrique ($U_{T01}$, $U_{TL01}$, $U_{TR01}$, $U_{TU2}$, $U_{T1H}$, $U_{T2V}$) multiplié par un troisième facteur constant ($\gamma$) et du carré de la deuxième tension d'ajustement électrique ($U_{T02}$, $U_{TL02}$, $U_{TR02}$, $U_{TU1}$, $U_{T2H}$, $U_{T1V}$) multiplié par un quatrième facteur constant ($\delta$) est réglée à une première valeur de référence du paramètre de quadrature ($U_T$) au carré, le paramètre de quadrature ($U_T$) étant déterminé à des moments définis et/ou périodiquement et/ou constamment en fonction et/ou à partir d'un signal de quadrature et le paramètre de résonance ($U_f$) étant déterminé à des moments définis et/ou périodiquement et/ou constamment en fonction et/ou à partir d'une fréquence d'un mode de relevé ou d'une différence de fréquences entre un mode de relevé et un mode d'entraînement, le paramètre de quadrature étant une grandeur de commande dans la régulation.

2. Procédé de fonctionnement en mesure précis d'un capteur de vitesse de rotation micromécanique, comprenant au moins une masse sismique (1, 15, 20) suspendue pouvant être déviée, au moins un dispositif d'entraînement destiné à entraîner la masse sismique (1, 15, 20) et au moins un premier (2, 11, 18) et un deuxième (3, 12, 19) élément d'électrode d'ajustement, lesquels sont associés ensemble directement ou indirectement à la masse sismique (1, 15, 20), une première tension d'ajustement électrique ($U_{T01}$, $U_{TL01}$, $U_{TR01}$, $U_{TU2}$, $U_{T1H}$, $U_{T2V}$) étant réglée entre le premier élément d'électrode d'ajustement (2, 11, 18) et la masse sismique (1, 15, 20) ainsi qu'une deuxième tension d'ajustement électrique ($U_{T02}$, $U_{TL02}$, $U_{TR02}$, $U_{TU1}$, $U_{T2H}$, $U_{T1V}$) entre le deuxième élément d'électrode d'ajustement (3, 12, 19) et la masse sismique (1, 15, 20), la première et la deuxième tension d'ajustement étant réglées au moins en dépendance d'un paramètre de quadrature ($U_T$) et d'un paramètre de résonance ($U_f$), **caractérisé en ce que** le réglage de la première et de la deuxième tension d'ajustement s'effectue au moyen d'une régulation, la première ($U_{T01}$, $U_{TL01}$, $U_{TR01}$, $U_{TU2}$, $U_{T1H}$, $U_{T2V}$) et la deuxième ($U_{T02}$, $U_{TL02}$, $U_{TR02}$, $U_{TU1}$, $U_{T2H}$, $U_{T1V}$) tension d'ajustement électrique étant réglées de telle sorte que la somme de la première tension d'ajustement électrique ($U_{T01}$, $U_{TL01}$, $U_{TR01}$, $U_{TU2}$, $U_{T1H}$, $U_{T2V}$) multipliée par un premier facteur constant ($\alpha$) et de la deuxième tension d'ajustement électrique ($U_{T02}$, $U_{TL02}$, $U_{TR02}$, $U_{TU1}$, $U_{T2H}$, $U_{T1V}$) multipliée par un deuxième facteur constant ($\beta$) est réglée à une première valeur de référence du paramètre de résonance ($U_f$) et qu'en plus la différence de la première tension d'ajustement électrique ($U_{T01}$, $U_{TL01}$, $U_{TR01}$, $U_{TU2}$, $U_{T1H}$, $U_{T2V}$) multipliée par un troisième facteur constant ($\gamma$) et de la deuxième tension d'ajustement électrique ($U_{T02}$, $U_{TL02}$, $U_{TR02}$, $U_{TU1}$, $U_{T2H}$, $U_{T1V}$) multipliée par un quatrième facteur constant ($\delta$) est réglée à une première valeur de référence du paramètre de quadrature ($U_T$), le paramètre de quadrature ($U_T$) étant déterminé à des moments définis et/ou périodiquement et/ou constamment en fonction et/ou à partir d'un signal de quadrature et le paramètre de résonance ($U_f$) étant déterminé à des moments définis et/ou périodiquement et/ou constamment en fonction et/ou à partir d'une fréquence d'un mode de relevé ou d'une différence de fréquences entre un mode de relevé et un mode d'entraînement, le paramètre de quadrature étant une grandeur de commande dans la régulation.

3. Procédé selon l'une des revendications 1 à 2, **caractérisé en ce que** le premier ($\alpha$), le deuxième ($\beta$), le troisième ($\gamma$) et le quatrième ($\delta$) facteur constant possèdent une valeur positive, laquelle est respectivement au moins dépendante d'un premier ($C_{T01}$, $C_{TL01}$, $C_{TR01}$) et d'un deuxième ($C_{T02}$, $C_{TL02}$, $C_{TR02}$) condensateur d'ajustement, le premier condensateur d'ajustement ($C_{TO1}$, $C_{TL01}$, $C_{TR01}$) étant au moins dépendant de la configuration respective du premier élément d'électrode d'ajustement (2, 11, 18) et de la masse sismique (1, 15, 20) ainsi que de leur arrangement et leur comportement de mouvement relatif l'un par rapport à l'autre et le deuxième condensateur d'ajustement ($C_{T02}$, $C_{TL02}$, $C_{TR02}$) étant au moins dépendant de la configuration respective du deuxième élément d'électrode d'ajustement (3, 12, 19) et de la masse sismique (1, 15, 20) ainsi que de leur arrangement et leur comportement de mouvement relatif l'un par rapport à l'autre.

4. Procédé selon l'une des revendications 1 à 3, **caractérisé en ce que** celui-ci comprend un procédé de régulation par lequel le paramètre de résonance ($U_f$) ou la première valeur de référence du paramètre de résonance est prédéfini en dépendance temporelle d'au moins un paramètre supplémentaire du capteur de vitesse de rotation et/ou d'un paramètre supplémentaire qui influence le fonctionnement du capteur de vitesse de rotation, ce paramètre supplémentaire étant notamment la température qui règne dans le capteur de vitesse de rotation et/ou dans son environnement direct.

5. Procédé selon l'une des revendications 1 à 4, **caractérisé en ce qu'**au moins le premier élément d'électrode d'ajustement (2, 11, 18) est raccordé à une première source de tension électrique et le deuxième élément d'électrode d'ajustement (3, 12, 19) et/ou la masse sismique (1, 15, 20) est/sont raccordé (s) à une deuxième source de tension électrique.

6. Procédé selon l'une des revendications 1 à 4, **caractérisé en ce que** le premier (2) et le deuxième (3) élément d'électrode d'ajustement possèdent respectivement au moins une surface d'électrode (6, 7), lesquelles sont disposées sensiblement parallèlement à une surface d'ajustement (8) de la masse sismique (1) et les surfaces d'électrode du premier (6) et du deuxième (7) élément d'électrode d'ajustement sont toujours associées à une zone opposée (4, 5) de la surface d'ajustement de la masse sismique et/ou chevauchent respectivement celle-ci, notamment indépendamment de l'état de déviation de la masse sismique (1), au moins jusqu'à une amplitude/déviation définie.

7. Capteur de vitesse de rotation micromécanique, comprenant au moins une masse sismique (1, 15, 20) suspendue pouvant être déviée, au moins un dispositif d'entraînement destiné à entraîner la masse sismique et au moins un premier (2, 11, 18) et un deuxième (3, 12, 19) élément d'électrode d'ajustement, lesquels sont associés ensemble directement ou indirectement à la masse sismique (1, 15, 20), notamment au moins le premier élément d'électrode d'ajustement (2, 11, 18) étant raccordé à une première source de tension électrique et le deuxième élément d'électrode d'ajustement (3, 12, 19) et/ou la masse sismique (1, 15, 20) étant raccordé(s) à une deuxième source de tension électrique, et une première tension d'ajustement électrique ($U_{T01}$, $U_{TL01}$, $U_{TR01}$, $U_{TU2}$, $U_{T1H}$, $U_{T2V}$) étant réglée entre le premier élément d'électrode d'ajustement (2, 11, 18) et la masse sismique (1, 15, 20) ainsi qu'une deuxième tension d'ajustement électrique ($U_{T02}$, $U_{TL02}$, $U_{TR02}$, $U_{TU1}$, $U_{T2H}$, $U_{T1V}$) entre le deuxième élément d'électrode d'ajustement (3, 12, 19) et la masse sismique (1, 15, 20),
**caractérisé en ce que** le capteur de vitesse de rotation est configuré de telle sorte qu'il est apte à mettre en oeuvre le procédé selon l'une des revendications 1 à 6.

8. Utilisation du capteur de vitesse de rotation selon la revendication 7 dans des véhicules automobiles, notamment dans un système de régulation de véhicule automobile.

# Fig. 1

## a)

## b)

# Fig. 2

# Fig. 3

# Fig. 4

## Fig. 5

$U_{T1H}$   11   $C_{T1H}$   $C_{T2H}$   12   $U_{T2H}$

S   S

1

S   S

13   $C_{T1V}$   $C_{T2V}$   14

$U_{T1V}$   $U_{T2V}$

y
x
z

## Fig. 6

S   S

22   23   20

$C_{T1H}$   $C_{T2H}$

$U_{T1H}$   $U_{T2H}$

21

$U_{T2V}$   $U_{T1V}$

$C_{T2V}$   $C_{T1V}$

24

25   24

S   S

y
x
z

Fig. 7

$U_{TO1} \neq 0V$

$U_{TO2} \neq 0V$

2

1

3

z

y ⊗ → x

Fig. 8

$U_{TO1} \neq 0V$

$U_{TO2} \neq 0V$

2

3

z

y ⊗ → x

9

1

10

$U_{TU1} = U_{TO2}$

$U_{TU2} = U_{TO1}$

EP 2 425 206 B1

Fig. 9

Fig. 10

Fig. 11

Start:

$U_f = \text{const}, U_T = U_{T,0}$    A

B

Messung des Quadratursignals QS

C

a) $QS > QS_0$

b) $QS = QS_0$

c) $QS < QS_0$

D

| | $U_T$ |
|---|---|
| a) | ↑ |
| b) | → |
| c) | ↓ |

E

$U_{TO1} = \sqrt{U^2_f + \text{sgn}(U_T) U^2_T}$

$U_{TO2} = \sqrt{U^2_f - \text{sgn}(U_T) U^2_T}$

EP 2 425 206 B1

# Fig. 12

Start:
$U_f = U_f(T)$, $U_T = U_{T,0}$  — A

Messung des Quadratursignals QS  — B

a) $QS > QS_0$
b) $QS = QS_0$
c) $QS < QS_0$  — C

| | $U_T$ |
|---|---|
| a) | ↑ |
| b) | → |
| c) | ↓ |

D

$$U_{TO1} = \sqrt{U^2_f(T) + \text{sgn}(U_T)\, U^2_T}$$

$$U_{TO2} = \sqrt{U^2_f(T) - \text{sgn}(U_T)\, U^2_T}$$

E

EP 2 425 206 B1

# Fig. 13

**A** — Start: $U_f = U_{f,0}$ , $U_T = U_{T,0}$

**B**
Messung des Quadratursignals QS

Messung des Frequenzabstandes $\Delta f$

**C**
a) $QS > QS_0$
b) $QS = QS_0$
c) $QS < QS_0$

d) $\Delta f > \Delta f_0$
e) $\Delta f = \Delta f_0$
f) $\Delta f < \Delta f_0$

**D**

|         | $U_T$ | $U_f$ |
|---------|-------|-------|
| a) + d) | ↑ | ↑ |
| a) + e) | ↑ | → |
| a) + f) | ↑ | ↓ |
| b) + d) | → | ↑ |
| b) + e) | → | → |
| b) + f) | → | ↓ |
| c) + d) | ↓ | ↑ |
| c) + e) | ↓ | → |
| c) + f) | ↓ | ↓ |

**E**

$$U_{TO1} = \sqrt{U^2_f + sgn(U_T) U^2_T}$$

$$U_{TO2} = \sqrt{U^2_f - sgn(U_T) U^2_T}$$

EP 2 425 206 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19939998 A1
- WO 03010492 A1